Europäisches Patentamt

European Patent Office

Office européen des brevets

(11) Veröffentlichungsnummer: **0 300 392 B1**

(12) **EUROPÄISCHE PATENTSCHRIFT**

(45) Veröffentlichungstag der Patentschrift: **18.03.92**

(21) Anmeldenummer: **88111472.2**

(22) Anmeldetag: **16.07.88**

(51) Int. Cl.⁵: **H02M 7/757**

(54) **Stromrichterschaltung zur Speisung eines Gleichspannungs-Zwischenkreises.**

<table>
<tr><td>

(30) Priorität: **24.07.87 DE 3724526**

(43) Veröffentlichungstag der Anmeldung:
**25.01.89 Patentblatt 89/04**

(45) Bekanntmachung des Hinweises auf die
Patenterteilung:
**18.03.92 Patentblatt 92/12**

(84) Benannte Vertragsstaaten:
**AT BE DE FR GB IT NL**

(56) Entgegenhaltungen:
**DE-A- 2 846 645**

**Appun et al: "Die elektrische Auslegung der Stromrichterausrüstung der Lokomotive BR120 der DB". Elektrische Bahnen 80 (1982) Heft 10, S 290-294; Heft 11, S 314-317**

</td><td>

(73) Patentinhaber: **Asea Brown Boveri Aktiengesellschaft**
**Kallstadter Strasse 1**
**W-6800 Mannheim-Käfertal(DE)**

(72) Erfinder: **Still, Ludwig**
**Im lichten Flecken 14**
**W-6141 Einhausen(DE)**

(74) Vertreter: **Rupprecht, Klaus, Dipl.-Ing. et al**
**c/o BBC Brown Boveri Aktiengesellschaft**
**ZPT Postfach 100351 Kallstadter Strasse 1**
**W-6800 Mannheim 1(DE)**

</td></tr>
</table>

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf eine Stromrichterschaltung zur Speisung eines Gleichspannungs-Zwischenkreises gemäß dem Oberbegriff des Anspruchs 1.

Eine derartige Stromrichterschaltung zur Speisung eines Gleichspannungs-Zwischenkreises ist aus P. Appun, E. Futterlieb, K. Kommissari, W. Marx, "Die elektrische Auslegung der Stromrichterausrüstung der Lokomotive BR 120 der Deutschen Bundesbahn", Elektrische Bahnen 80 (1982), Heft 10, Seite 290 bis 294 und Heft 11, Seite 314 bis 317 bekannt.

Es handelt sich dabei um einen über einen Transformator gespeisten, selbstgeführten, gepulsten Eingangsstromrichter, der mit einem auf die doppelte Netzfrequenz abgestimmten Saugkreis zu einem Vierquadrantensteller kombiniert ist. Mit Hilfe des bzw. mehrerer parallel arbeitender Vierquadrantensteller wird die Zwischenkreisspannung auf einem konstanten Wert gehalten. Am Gleichspannungs-Zwischenkreis wird ein in Amplitude und Frequenz steuerbarer Pulswechselrichter zur Speisung einer als Traktionsantrieb dienenden Drehstrom-Asynchronmaschine betrieben.

Der zunehmende Wunsch des grenzüberschreitenden Verkehrs bedingt, außer dem Betrieb an Wechselspannung (15 kV, $16^2/_3$ Hz, bzw. 25 kV, 50 Hz) auch einen Betrieb an (vorzugsweise 3 kV bzw. 1,5 kV) Gleichspannungsnetzen zu ermöglichen.

Der Erfindung liegt davon ausgehend die Aufgabe zugrunde, eine Stromrichterschaltung zur Speisung eines Gleichspannungs-Zwischenkreises der eingangs genannten Art anzugeben, die wahlweise an einem Wechselspannungs- und an einem Gleichspannungsnetz betrieben werden kann.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß ein universell nutzbarer Einspeisestromrichter für Mehrsystemfahrzeuge geschaffen wird, dessen Leistungsfähigkeit der Antriebseinheit am Gleichspannungsnetz derjenigen am Wechselspannungsnetz entspricht. Die Zwischenkreisspannung kann auch beim Betrieb am Gleichspannungsnetz konstant auf dem Nennwert gehalten werden, was eine optimale Stromrichter- und Maschinenauslegung ermöglicht. Dabei sind Netzspannungstoleranzen von +20% und -30% des Nennwertes zu berücksichtigen. Der Schaltkontakt muß auch bei mehreren, parallel auf einen Zwischenkreis arbeitenden Einspeisestromrichtern nur einmal vorhanden sein. Der Schaltkontakt ist lediglich bei Betriebsübergängen von Wechselspannungseinspeisung auf Gleichspannungseinspeisung und umgekehrt zu betätigen, nicht jedoch bei Betriebsübergängen von Fahren nach Bremsen und umgekehrt.

Es ist vorteilhaft möglich, die gleichen Komponenten bei der Gleich- und Wechselspannungseinspeisung für unterschiedliche Aufgaben heranzuziehen, d.h. unterschiedlich auszunutzen, wodurch sich eine Gewichts- und Preisreduktion ergibt.

Zweckmäßige Weiterbildungen der Erfindung sind in den Unteransprüchen gekennzeichnet.

Die Erfindung wird nachstehend anhand der in der Zeichnung dargestellten Ausführungsbeispiele erläutert.

Es zeigen:

Fig. 1      einen bekannten, selbstgeführten Stromrichter zur Speisung von Drehstrom-Asynchronmaschinen aus einem Wechselspannungsnetz,

Fig. 2      einen selbstgeführten Stromrichter zur Speisung von Drehstrom-Asynchronmaschinen aus einem Wechselspannungsnetz oder Gleichspannungsnetz,

Fig. 3, 4      Varianten zur Grundschaltung gemäß Fig. 2,

Fig. 5      die Gruppierung eines Einspeisestromrichters am Gleichspannungsnetz,

Fig. 6      die zeitlichen Verläufe interessierender Größen für den Fahrbetrieb,

Fig. 7      weitere Varianten zur Grundschaltung gemäß Fig. 2.

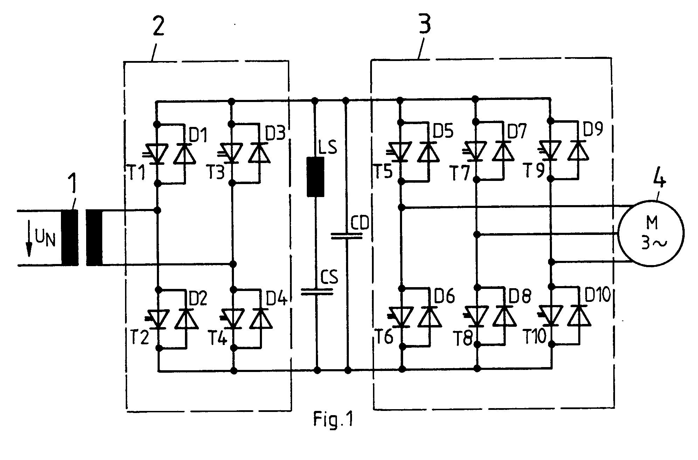

In Fig. 1 ist ein z.B. aus Elektrische Bahnen 80 (1982), Heft 10, Seite 290 bis 294 und Heft 11, Seite 314 bis 317, Verlag Oldenburg München, bekannten selbstgeführter Stromrichter zur Speisung von Drehstrom-Asynchronmaschinen aus einem Wechselspannungsnetz dargestellt. Ein an ein Wechselspannungsnetz angeschlossener Transformator (z.B. Netzwechselspannung $U_N$ = 15 kV, $16^2/_3$ Hz oder $U_N$ = 25 KV, 50 Hz) speist einen Vierquadrantensteller 2. Der Vierquadrantensteller 2 weist vier in Brückenschaltung angeordnete Zweige mit je einem GTO-Thyristor T1...T4 und hierzu antiparallele Dioden D1...D4 auf. Gleichspannungsseitig ist der Vierquadrantensteller 2 mit einem Saugkreis, bestehend aus der Reihenschaltung einer Saugkreisdrossel LS und eines Saugkreiskondensators CS und mit einem Zwischenkreiskondensator CD beschaltet und speist einen Pulswechselrichter 3 in Drehstrom-Brückenschaltung. Der Pulswechselrichter 3 weist sechs Zweige mit je einem GTO-Thyristor T5...T10 und hierzu antiparallele Dioden D5...D10 auf. Der Pulswechselrichter 3 speist eine Drehstrom-Asynchronmaschine 4.

Anstelle eines einzigen Vierquadrantenstellers 2 können auch mehrere Vierquadrantensteller parallelgeschaltet sein. Mit Hilfe des bzw. der parallel arbeitenden Vierquadrantensteller wird die Zwischenkreisspannung auf einem konstanten Wert gehalten. Für Hochleistungstriebfahrzeuge wird vorzugsweise eine Zwischenkreisspannung von 2,8 kV eingestellt.

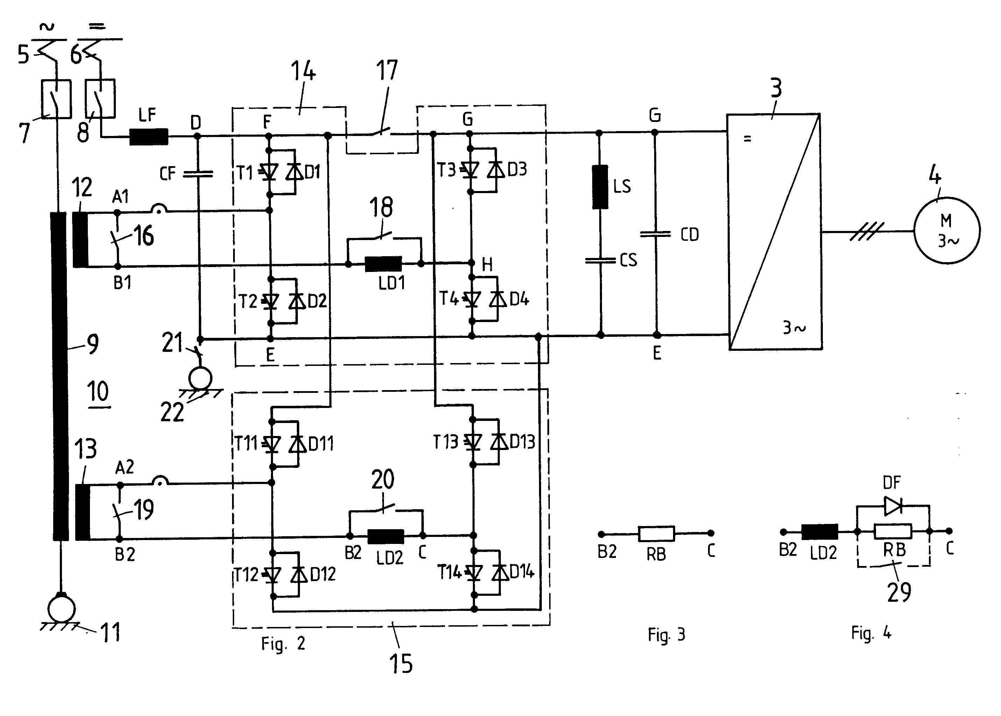

Dieses bekannte Stromrichterkonzept, bestehend aus Vierquadrantensteller und Pulswechselrichter liegt der nach folgend beschriebenen Grundschaltung gemäß Fig. 2 zugrunde.

In Fig. 2 ist ein selbstgeführter Stromrichter zu Speisung von Drehstrom-Asynchronmaschinen aus einem Wechselspannungsnetz oder Gleichspannungsnetz dargestellt. Es können z.B. wahlweise ein Wechselspannungsnetz von 15 kV, $16^2/_3$ Hz bzw. 25 kV, 50 Hz oder ein Gleichspannungsnetz von 3 kV bzw. 1,5 kV angeschlossen werden. Der stromabnehmende (im Ausführungsbeispiel positive) Pol des Wechselspannungsnetzes ist mit 5 und der stromabnehmende (im Ausführungsbeispiel positive) Pol des Gleichspannungsnetzes ist mit 6 bezeichnet. Die Pole 5 bzw. 6 sind über Eingangsschalter 7 bzw. 8 zunschaltbar.

Der Eingangsschalter 7 ist mit der Primärwicklung 9 eines Transformators 10 verbunden. Andererseits liegt die Primärwicklung 9 über dem Rad-Schiene-Kontakt am zweiten (im Ausführungsbeispiel negativen) Pol 11 des Wechselspannungsnetzes. Der Transformator 10 weist zwei Sekundärwicklungen 12 bzw. 13 auf, wobei die Wicklung 12 einen ersten Einspeisestromrichter 14 und die Wicklung 13 einen zweiten Einspeisestromrichter 15 speist. Die Wicklung 12 ist mittels eines Schaltkontaktes 16 kurzschließbar.

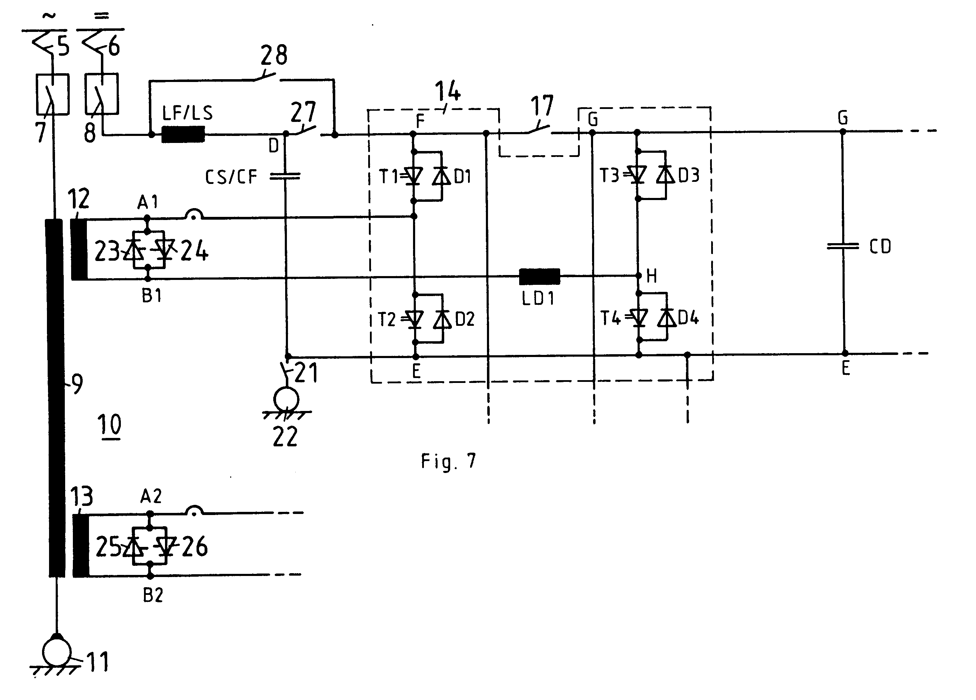

Der Einspeisestromrichter 14 weist vier Zweige mit je einem GTO-Thyristor T1...T4 und hierzu antiparallele Dioden D1...D4 auf. Der erste Zweig T1/D1 liegt zwischen dem Wechselspannungsanschluß A1 der Wicklung 12 und einem Gleichspannungsanschluß D. Der Gleichspannungsanschluß D ist bei der Grundschaltung gemäß Fig. 2 gleich dem gleichspannungsseitigen Anschluß F des ersten Zweiges (in Fig. 7 ist eine Abweichung hiervon dargestellt).

Der zweite Zweig T2/D2 liegt zwischen dem Wechselspannungsanschluß A1 der Wicklung 12 und einem Gleichspannungsanschluß E. Der Anschluß E bildet die (im Ausführungsbeispiel negative) Gleichspannungsklemme des Einspeisestromrichters 14 und ist über einen Netzfilterkondensator CF mit dem Gleichspannungsanschluß D sowie direkt mit dem Pulswechselrichter 3 verbunden. Der Gleichspannungsanschluß D liege über einer Netzfilterdrossel LF am Eingangsschalter 8 sowie über einem Schaltkontakt 17 an einem gleichspannungsseitigen Anschluß G, der den (im Ausführungsbeispiel positiven) Gleichspannungsausgang des Einspeisestromrichters 14 darstellt und direkt mit dem Pulswechselrichter 3 verbunden ist.

Der weitere Wechselspannungsanschluß B1 der Sekundärwicklung 12 liegt über einer ersten Glättungsdrossel LD1 an einem Anschluß H, wobei dieser Anschluß H den gemeinsamen wechselspannungsseitigen Verbindungspunkt des dritten und vierten Zweiges oder Einspeisestromrichters 14 darstellt. Der dritte Zweig T3/D3 liegt andererseits am gleichspannungsseitigen Anschluß G und der vierte Zweig andererseits im Gleichspannungsanschluß E. Die erste Glättungsdrossel LD1 ist mittels eines Schaltkontaktes 18 kurzschließbar.

Zwischen den gleichspannungsseitigen Anschlüssen G und E sind der Zwischenkreiskondensator CD und die Reihenschaltung der Saugkreisdrossel LS mit dem Saugkreiskondensator CS angeordnet.

Die den zweiten Einspeisestromrichter 15 speisende Wicklung 13 ist mittels eines Schaltkontaktes 19 kurzschließbar. Der Einspeisestromrichter 15 weist vier Zweige mit je einem GTO-Thyristor T11, T14 und hierzu antiparallele Dioden D11...D14 auf. Der erste Zweig T11/D11 liegt zwischen dem Wechselspannungsanschluß A2 der Wicklung 13 und dem Gleichspannungsseitigen Anschluß F. Am weiteren Wechselspannungsanschluß B2 der Wicklung 13 liegt eine zweite Glättungsdrossel LD2. Die weitere Klemme dieser Glättungsdrossel LD2 bildet einen gemeinsamen Anschluß C des dritten und vierten Zweiges des Stromrichters 15. Die zweite Glättungsdrossel LD2 ist mittels eines Schaltkontaktes 20 kurzschließbar. Der dritte Zweig T13/D13 liegt andererseits am gleichspannungsseitigen Anschluß G. Der vierte Zweig T14/D14 ist andererseits gleichspannungsseitig mit dem zweiten Zweig T12/D12 verbunden, der wiederum andererseits am Wechselspannungsanschluß A2 der Wicklung 13 liegt. Der gleichspannungsseitige Verbindungspunkt des zweiten und vierten Zweiges des zweiten Einspeisestromrichters ist an dem gleichspannungsseitigen Anschluß E. des ersten Einspeisestromrichters angeschlossen.

Der Anschluß E is über einen Schaltkontakt 21 und den Rad-Schiene-Kontakt mit dem zweiten (im Ausführungsbeispiel negativen) Pol 22 des Gleichspannungsnetzes verbindbar. An den Pulswechselrichter 3 ist wiederum eine oder mehrere Drehstrom-Asynchronmaschine (n) 4 angeschlossen.

In Fig. 3 ist eine erste Variante zur Grundschaltung gemäß Fig. 2 dargestellt, bei der ein Bremswiderstand RB anstelle der zweiten Glättungsdrossel LD2 zwischen den Anschlüssen B2-C angeordnet ist. Die Erläuterung dieser Variante folgt im Anschluß an Fig.7.

In Fig. 4 ist eine zweite Variante zur Grundschaltung gemäß Fig. 2 dargestellt, bei der die zweite Glättungsdrossel LD2 in Reihe mit dem Bremswiderstand RB zwischen den Anschlüssen B2-C geschaltet ist, wobei dem Bremswiderstand RB eine Diode DF bzw. ein Schaltkontakt 29 parallelliegt. Die Erläuterung hierzu folgt im Anschluß an Fig. 7.

Durch Öffnen der Kontakte 16, 19, 21 sowie des Eingangsschalters 8 und Schließen der Kontakte 17, 18, 20 sowie des Eingangsschalters 7 werden die Einspeisestromrichter 14 und 15, die auf einen Zwischenkreis arbeiten, so gruppiert, daß eine Betrieb am Wechselspannungsnetz möglich ist. Dabei sind die Einspeisestromrichter jeweils als Vierquadrantensteller gruppiert und arbeiten in der z.B. aus Elektrische Bahnen 80 (1982), Heft 10, Seite 290 bis 294 und Heft 11, Seite 314 bis 317 bekannten Art und Weise.

Durch Öffnen der Kontakte 17, 18, 20 sowie des Eingangs schalters 7 und Schließen der Kontakte 16, 19, 21 sowie des Eingangsschalters 8 werden die Einspeisestromrichter 14 und 15, die auf einen Zwischenkreis arbeiten, so gruppiert, daß ein Betrieb am Gleichspannungsnetz möglich ist. Dabei sind die Einspeisestromrichter jeweils als Tiefsetz-Hochsetz- bzw. Hochsetz-Tiefsetz-Reihenschaltung gruppiert und arbeiten in der z.B. aus der DE-OS 31 04 965 bekannten Weise.

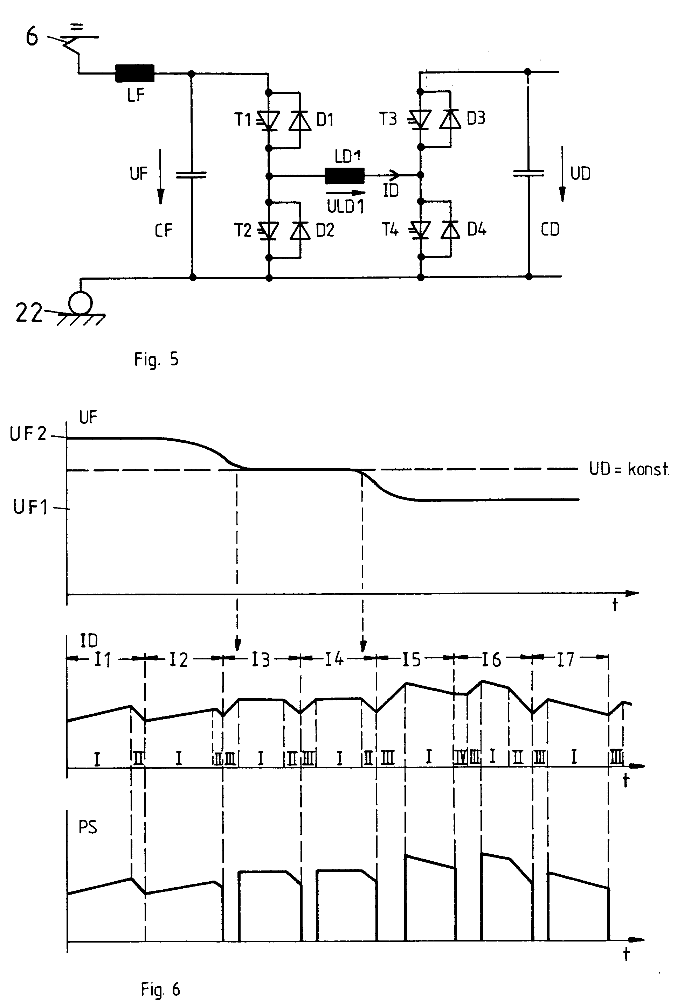

In Fig. 5 ist die Gruppierung eines Einspeisestromrichters am Gleichspannungsfahrdraht dargestellt, wobei lediglich ein Einspeisestromrichter berücksichtigt ist. Im einzelnen ergibt sich folgende Schaltung: Die Netzfilterdrossel LF liegt einerseits direkt am stromabnehmenden Pol 6 des Gleichspannungsnetzes, andererseits ist sie mit dem ersten Zweig T1/D1 sowie mit dem Netzfilterkondensator CF verbunden. Die Spannung am Netzfilterkondensator beträgt UF. Der Netzfilterkondensator CF ist andererseits am zweiten Pol 22 des Gleichspannungsnetzes angeschlossen. Am zweiten Pol; 22 liegen desweiteren der zweite Zweig T2/D2, der vierte Zweig T4/D4 und der Zwischenkreiskondensator CD. Die beiden Zweige T2/D2 und T1/D1 sind andererseits miteinander verbunden und über die Glättungsdrossel LD an den gemeinsamen Verbindungspunkt der beiden Zweigte T3/D3 und T4/D4 angeschlossen. Die Spannung an der Glättungsdrossel LD beträgt ULD. Der Strom durch die Glättungsdrossel beträgt ID. Der dritte Zweig T3/D3 liegt andererseits am Zwischenkreiskondensator CD. Die Zwischenkreisspannung am Kondensator CD ist mit UD bezeichnet.

Ein Schalten der Schaltkontakte 16 bis 21 bei Betriebsübergängen von Fahren nach Bremsen und umgekehrt ist nicht erforderlich.

Eine Besonderheit der Schaltung besteht darin, daß bei Fahrdrahtspannungen bzw. Spannungen UF, die sowohl oberhalb als auch unterhalb der Zwischenkreisspannung UD liegen, die Zwischenkreisspannung konstant auf ihrem Nennwert gehalten werden kann und damit die volle Leistung zur Verfügung steht. Diese Eigenschaft wird dadurch erreicht, daß der Einspeisestromrichter wahlweise als Tiefsetzsteller, als Hochsetzsteller oder in wechselnder Betriebsart arbeitet. Der Übergang von einer Betriebsart zur anderen (vom Tiefsetzstellerbetrieb zum Hochsetzstellerbetrieb und umgekehrt) läßt sich auch bei konstanter Taktfrequenz des Einspeisestromrichters stetig und ohne tote Spannungszone durchführen.

Da der Einspeisestromrichter symmetrisch zum Netzfilterkondensator CF bzw. zum Zwischenkreiskondensator CD aufgebaut ist, gelten diese Eigenschaften nicht nur für den Fahrbetrieb, sondern ebenso für den Netzbremsbetrieb.

Bei Betrieb am Gleichstromfahrdraht liegt nur eine Phase des Einspeisestromrichters (Zweige T1/D1 und T2/D2) parallel zum Netzfilterkondensator CF und muß dementsprechend auch für den Betrieb an dieser erhöhten Spannung ausgelegt sein. Die anderen Phasen bleiben unverändert am Gleichspannungszwischenkreis. Entschärft wird der Betrieb der einen Phase an der gegenüber der Zwischenkreispannung UD erhöhten Eingangsspannung UF dadurch, daß die zu kommutierenden Scheitelströme z.B. an 3 kV-Gleichspannung nur etwa 40% gegenüber den an Wechselspannung zu kommutierenden Scheitelströmen betragen. Die Scheitelspannung der GTO-Thyristoren T1 und T2 ist damit bei praktischer Auslegung und einer Zwischenkreisspannung von z.B. 2,8 kV nicht größer, als bei Betrieb am Wechselspannungsnetz, so daß kein erhöhter Aufwand notwendig ist.

Im folgenden wird die Betriebsweise des Einspeisestromrichters am Gleichstromfahrdraht für Fahrbetrieb anhand der Figuren 5 und 6 erläutert. In Fig. 6 sind hierzu die zeitlichen Verläufe der Eingangsspannung UF, des Stromes ID und der Leistung PS dargestellt. Es sind je vier Schaltzustände für den Fahr- und Netzbremsbetrieb möglich. Beim Schaltzustand I der Betriebsart "Fahren" leiten die Ventile T1 und D3 und die Spannung ULD1 beträgt UF - UD. Der Strom |ID| steigt beim Schaltzustand I, wenn die Eingangsspannungs UF größer als die Zwischenkreisspannung UD ist und der Strom |ID| fällt, wenn die Eingangsspannung UF kleiner als die Zwischenkreisspannung UD ist.

Beim Schaltzustand II der Betriebsart "Fahren" leiten die Ventile D2, D3 und die Spannung ULD1 beträgt - UD. Der Strom |ID| fällt.

Beim Schaltzustand III der Betriebsart "Fahren" leiten die Ventile T1, T4 und die Spannung ULD1 beträgt UF. Der Strom |ID| steigt.

Beim Schaltzustand IV der Betriebsart "Fahren" leiten die Ventile T4, D2 und die Spannung ULD1 beträgt 0. Der Strom |ID| bleibt konstant.

Beim Schaltzustand V der Betriebsart "Bremsen" leiten die Ventile T3, D1 und die Spannung ULD1 beträgt UF - UD. Der Strom |ID| fällt beim Schaltzustand V, wenn die Eingangsspannung UF größer als die Zwischenkreisspannung UD ist und der Strom |ID| steigt, wenn die Eingangsspannung UF kleiner als die Zwischenkreisspannung UD ist.

Beim Schaltzustand VI der Betriebsart "Bremsen" leiten die Ventile D1, D4 und die Spannung ULD1 beträgt UF. Der Strom |ID| fällt.

Beim Schaltzustand VII der Betriebsart "Bremsen" leiten die Ventile T2, T3 und die Spannung ULD1 beträgt -UD. Die Strom |ID| steigt.

Beim Schaltzustand VIII der Betriebsart "Bremsen" leiten die Ventile T2, D4 und die Spannung ULD1 beträgt 0. Der Strom |ID| bleibt konstant.

Nach den in Fig. 5 angegebenen Zählpfeilen ist der Strom |ID| im Fahrbetrieb positiv und im Bremsbetrieb, außer bei sehr kleinen Drehzahlen (fast Stillstand), negativ.

Im Liniendiagramm nach Fig. 6 ist am Beispiel des Fahrbetriebes prinzipiell die Betriebsweise bei Fahrdrahtspannungsschwankungen UF1 ≤ UD ≤ UF2 während der Taktperioden I1, I2...I7 gezeigt. Während der Taktperiode I1 treten die vorstehend beschriebenen Schaltzustände I und II, während der Taktperiode I2 die Schaltzustände I und II, während der Taktperiode I3 die Schaltzustände III, I und II, während der Taktperiode I4 die Schaltzustände III, I und II, während der Taktperiode I5 die Schaltzustände III und I, während der Taktperiode I6 die Schaltzustände IV, III, I und II und während der Taktperiode I7 die Schaltzustände III und I auf.

Wie im Liniendiagramm nach Fig. 6 zu sehen ist, wird bei UF > UD die Leistung PS vom Einspeisestromrichter im Tiefsetzbetrieb übertragen (siehe Taktperioden I1 und I2).

Bei UF < UD wird die Leistung PS im Hochsetzbetrieb übertragen (siehe Taktperiode I7). Der reine Hoch- bzw. Tiefsetzbetrieb hat bei konstanter Taktfrequenz durch die Minimal- bzw. Maximal-Einschaltzeit des GTO-Thyristors im Beriech UF ~ UD eine tote Zone. Diese tote Zone läßt sich bei konstanter Taktfrequenz durch den Wechsel zwischen Hoch- und Tiefsetzbetrieb innerhalb einer Taktperiode vermeiden (siehe Taktperioden I3 bis I6).

Zusätzlich hilfreich bei schnellen dynamischen Änderungen der Fahrdrahtspannung (Spannung UF) oder bei schneller Leistungsreduktion ist de Schaltzustand IV (siehe Taktperiode I6). Während dieses Schaltzustandes IV ist die Spannung ULD1 an der Glättungsdrossel 0, wie bereits erwähnt.

Ein unkontrolliertes Hin- und Herschalten zwischen Tiefsetz-, Wechsel- und Hochsetzbetrieb wird durch eine entsprechende Umschalthysterese des die Zwischenkreisspannung UD konstant haltenden Reglers vermieden.

Im Fahrbetrieb werden die GTO-Thyristoren T1 und T4 in jeder Taktperiode I1...I7 maximal einmal ein- und ausgeschaltet. Die Schalthäufigkeit muß im Wechselbetrieb (Wechsel- zwischen Hoch- und Tiefsetzbetrieb) nicht erhöht werden. Es muß lediglich die Schaltzustands-Reihenfolge IV, III, I, II oder I, III, IV, II eingehalten werden.

Entsprechendes gilt für die im Netzbremsbetrieb gesteuerten GTO-Thyristoren T2 und T3.

In der Fig. 7 sind weitere Varianten zur Grundschaltung gemäß Fig. 2 dargestellt. Dabei sind gemäß einer ersten Variante die eine mechanische Transformatorüberbrückung bewirkenden Schaltkontakte 16 bzw. 19 durch elektronische Netzkurzschließer, bestehend aus je zwei antiparallel angeordneten Thyristoren 23, 24 bzw. 25, 26 zwischen den Anschlüssen A1, B1 bzw. A2, B2 ersetzt.

Die für den Betrieb am Wechselspannungsnetz zur Funktionsweise der Einspeisestromrichter 14, 15 als Vierquadrantensteller erforderliche hohe Transformatorstreuung (Transformator 10) kann wegen der ohnehin für den Betrieb am Gleichspannungsnetz notwendigen Glättungsdrossel LD1, LD2 auf die konstruktiv bedingte minimale Transformatorstreung reduziert werden. Dadurch wird der Transformatoraufwand vermindert und die Glättungsdrosselüberbrückungen, d.h. die Schaltkontakte 18, 20, entfallen, wie in Fig. 7 gemäß einer zweiten Variante gezeigt.

Gemäß einer in Fig. 7 gezeigten dritten Variante läßt sich durch einfache Gruppierung der aus dem Saugkreiskondensator CS und der Saugkreisdrossel LS bestehende Saugkreis ganz oder zumindest teilweise als Netzfilter, bestehend aus dem Netzfilterkondensator CF und der Netzfilterdrossel LF nutzen. Hierzu sind zwischen Anschluß D und Anschluß E ein Netzfilter/Saugkreis-Kondensator CF/-CS und zwischen Anschluß D und dem Eingangsschalter 8 eine Netzfilter/Saugkreisdrossel LF/LS geschaltet. Zwischen dem Anschluß D und dem gleichspannungsseitigen Anschluß F des ersten Zweiges T1/D1 ist ein zusätzlicher Schaltkontakt 27 vorgesehen. Ein weiterer zusätzlicher Schaltkontakt 28 liegt zwischen dem Eingangsschalter 8 und dem gleichspannungsseitigen Anschluß F des ersten Zweiges T1/D1. Die Bauteile CF/CS und LF/LS übernehmen sowohl die Funktion des ursprünglichen Saugkreises LS, CS, als auch die Funktion des ursprünglichen Netzfilters LF, CF. Bei Betrieb am Gleichspannungsnetz werden der Schaltkontakt 27 geschlossen und der Schaltkontakt 28 geöffnet, so daß LF/LS und CS/CF als Netzfilter wirken. Bei Betrieb am Wechselspannungsnetz werden der Schaltkontakt 27 geöffnet und der Schaltkontakt 28 geschlossen, so daß LF/LS und CS/CF als Saugkreis wirken.

Bei Forderung nach netzunabhängiger Bremse kann jedem Zwischenkreis ein Bremssteller zugeordnet werden. Bei entsprechend geringer Leistung kann auch einer der Einspeisestromrichter des Zwischenkreises als Bremssteller mitgenutzt werden.

Wenn es ausreicht, die Fahr- und Bremsleistung einer Antriebseinheit bzw. eines Zwischenkreises von lediglich einem einzigen Einspeisestromrichter zu erbringen, so steht der zweite Einspeisestromrichter komplett zu Bremszwecken zur Verfügung. In diesem Fall kann die Glättungsdrossel LD2 durch einen Bremswiderstand RB zwischen den Anschlüssen B2 und C ersetzt werden, wie unter Fig. 3 erwähnt und gezeigt.

Vorteilhaft bei dieser Ausgestaltung gemäß Fig. 3. ist, daß der Einspeisestromrichter 15 und der Bremswiderstand RB nicht nur bei Bremsbetrieb zur Konstanthaltung der Spannung am Zwischenkreiskondensator CD durch Takten der GTO-Thyristoren T12, T13 genutzt werden kann, sondern daß auch die Funktion eines Überspannungsbegrenzers für den Netzfilterkondensator CF durch bedarfsweises Takten der GTO-Thyristoren T11, T14 mit übernommen wird. Eine Überspannungsbegrenzung kann z.B. bei Lastabwurf im Fahrbetrieb notwending sein.

Sollten jedoch zur Erbringung der Fahrleistung alle auf einen Zwischenkreis arbeitenden Einspeisestromrichter erforderlich sein, so kann die Widerstandsbremsfunktion durch eine Anordnung nach Fig. 4 realisiert werden. Zwischen den Anschlüssen B2 und C liegt dann die Reihenschaltung von Glättungsdrossel LD2 und Bremswiderstand RB. Die Diode DF überbrückt den Bremswiderstand RB derart, daß im Fahrbetrieb (ID ist positiv) der Bremswiderstand RB unwirksam ist.

Im reinen Widerstandsbremsbetrieb bei der Variante gemäß Fig. 4 erhält der GTO-Thyristor T12 wegen der magnetischen Energie, die in der Glättungsdrossel LD2 gespeichert ist, einen Dauerzündbefehl. Die eigentliche Leistungsstellfunktion übernimmt der zyklisch taktende GTO-Thyristor T13 durch Verändern seiner Einschaltdauer. Durch periodisches Sperren des GTO-Thyristors T12 kann jedoch auch ein Teil der Energie über die Diode D1 ins Netz zurückgespeist werden (teilweise Netzrückspeisung).

Sollte die Glättungsdrossel LD2 bei de Variante gemäß Fig. 4 auch für Betrieb am Wechselspannungsnetz genutzt werden, so muß eine Bremswiderstandsüberbrückung mittels eines Schaltkontaktes 29 vorgesehen werden. Diese Variante ist in Fig. 4 gestrichelt dargestellt. Ist die Glättungsdrossel LD2 nur am Gleichspannungsnetz erforderlich, so erfolgt die gemeinsame Überbrückung von LD und RB durch den zwischen B2 und C angeordneten Schaltkontakt 20.

Für alle beschriebenen Schaltungen ist zu bemerken, daß die Anordnungen in ihrer einfachen Ausführung lediglich einen einzigen Einspeisestromrichter und nicht zwei oder mehrere parallel auf einen Zwischenkreis arbeitende Einspeisestromrichter aufweist. Anstelle der beschriebenen GTO-Thyristoren sind allgemein zünd- und löschbare Ventile einsetzbar. Anstelle der Dioden sind allgemein ungesteuerte Gleichrichter einsetzbar.

**Patentansprüche**

1. Stromrichterschaltung zur Speisung eines Gleichspannungs-Zwischenkreises aus einem Wechselspannungsnetz, wobei die Wechselspannungsanschlüsse über eine Glättungsdrossel (LD1, LD2) an die entsprechenden Anschlüsse der aus vier Zweigen bestehenden Brückenschaltung geführt sind, wobei jeder Zweig ein zünd- und löschbares Ventil (T1...T4) mit antiparallelem ungesteuertem Gleichrichter (D1...D4) aufweist, dadurch gekennzeichnet, daß zur alternativen Speisung aus einem Gleichspannungsnetz ein Schaltkontakt (17) zwischen den gleichspannungsseitigen Anschlüssen (F,G) von zwei Zweigen gleicher Polarität (T1/D1, T3/D3) vorgesehen ist, wobei die Speisung aus einem Gleichspannungsnetz bei geöffnetem Schaltkontakt (17) über die Gleichspannungsanschlüsse (D,E) des Stromrichter erfolgt, während die Wechselspannungsanschlüsse (A1,B1,A2,B2) kurzgeschlossen sind.

2. Stromrichterschaltung nach Anspruch 1, dadurch gekennzeichnet, daß die Wechselspannungsanschlüsse (A1,-B1,A2,B2) mittels eines Schaltkontaktes (16,19) kurzschließbar sind.

3. Stromrichterschaltung nach Anspruch 1, dadurch gekennzeichnet, daß die Wechselspannungsanschlüsse (A1,-B1,A2,B2) mittels eines elektronischen Netzkurzschließers, bestehend aus zwei antiparallelen Thyristoren (23,24,25,26) kurzschließar sind.

4. Stromrichterschaltung nach einem der Ansprüche 1 bis 3, dadurch gekennzeichnet, daß die Glättungsdrossel (LD1,LD2) durch einen Schaltkontakt (18,20) kurzschließbar ist.

5. Stromrichterschaltung nach Anspruch 1, dadurch gekennzeichnet, daß für den Einsatz eines Netzfilters als Saugkreis ein Schaltkontakt (27) zwischen Drossel (LF/LS) und gleichspannungsseitigem Anschluß (F) des Stromrichters sowie ein weiterer Schaltkontakt (28) zwischen einem Anschlußpol des Gleichspannungsnetzes und dem gleichspannungsseitigen Anschluß (F) vorgesehen sind, wobei Drossel (LF/LS) und Kondensator (CS/CF) unmittelbar miteinander verbunden sind.

6. Stromrichterschaltung nach einem der Ansprüche 1 bis 5, dadurch gekennzeichnet, daß mindestens ein weiterer Einspeisestromrichter (15) zur Speisung desselben Zwischenkreises vorgesehen ist, der gleichspannungsseitig parallel zum ersten Einspeisestromrichter (14) liegt, dessen einer Gleichspannungsanschluß mit dem ungeschalteten Gleichspannungsanschluß (E) des ersten Einspeisestromrichters (14) verbunden ist und dessen zweiter Gleichspannungsanschluß aufgetrennt und an die beiden Klemmen des den einen Gleichspannungsanschluß des ersten Einspeisestromrichters (14) auftrennenden Schaltkontaktes (17) angeschlossen ist.

7. Stromrichterschaltung nach Anspruch 6, dadurch gekennzeichnet, daß die Glättungssdrossel (LD2) eines Einspeisestromrichters (15) durch einen Bremswiderstand (RB) ersetzt ist.

8. Stromrichterschaltung nach Anspruch 7, dadurch gekennzeichnet, daß der Bremswiderstand (RB) duch einen Schaltkontakt (20) überbrückt ist.

9. Stromrichterschaltung nach Anspruch 6, dadurch gekennzeichnet, daß in Serie zur Glättungsdrossel (LD2) eines Einspeisestromrichters (15) ein Bremswiderstand (RB) liegt.

10. Stromrichterschaltung nach Anspruch 9, dadurch gekennzeichnet, daß der Bremswiderstand (RB) durch eine Diode (DF) überbrückt ist.

11. Stromrichterschaltung nach Anspruch 9, dadurch gekennzeichnet, daß der Bremswiderstand (RB) durch einen Schaltkontakt (29) überbrückt ist.

## Claims

1. Converter circuit for supplying a DC intermediate circuit from an AC network, the AC terminals being guided by a smoothing inductor (LD1, LD2) to the corresponding terminals of the bridge circuit, consisting of four arms, each arm having a valve (T1...T4) which can be turned on and off, with an uncontrolled rectifier (D1...D4) connected in reverse-parallel thereto, characterised in that a switch contact (17) is provided between the terminals (F, G), on the DC side, of two arms of the same polarity (T1/D1, T3/D3) for the alternative supply from a DC network, the supply from a DC network being implemented, when the switch contact (17) is open, via the DC terminals (D, E) of the converter, while the AC terminals (A1, B1, A2, B2) are short-circuited.

2. Converter circuit according to Claim 1, characterised in that the AC terminals (A1, B1, A2, B2) can be short-circuited by means of a switch contact (16, 19).

3. Converter circuit according to Claim 1, characterised that the AC terminals (A1, B1, A2, B2) can be short-circuited by means of an electronic network short-circuiting device, consisting of two thyristors (23, 24, 25, 26) connected in reverse-parallel.

4. Converter circuit according to Claim 1, characterised in that the smoothing inductor (LD1, LD2) can be short-circuited by a switch contact (18, 20).

5. Converter circuit according to Claim 1, characterised in that, for use of a network filter as a series-resonant circuit, a switch contact (27) is provided between the inductor (LF/LS) and the terminal (F) of the converter, on the DC side, and a further switch contact (28) is provided between a terminal pole of the DC network and the terminal (F) on the DC side, the inductor (LF/LS) and capacitor (CS/CF) being directly connected to one another.

6. Converter according to one of Claims 1 to 5, characterised in that at least one further supply converter (15) is provided for supplying the intermediate circuit of the same, which further converter (15) is connected on the DC side in parallel with the first supply converter (14), whose one DC terminal is connected to the unconnected DC terminal (E) of the first supply converter (14) and whose second DC terminal is isolated and is connected to the two terminals of the switch contact (17) which isolates the one DC terminal of the first supply converter (14).

7. Converter circuit according to Claim 6, characterised in that the smoothing inductor (LD2) of one supply converter (15) is replaced by a load resistor (RB).

8. Converter circuit according to Claim 7, characterised in that the load resistor (RB) is bridged by a switch contact (20).

9. Converter circuit according to Claim 6, characterised in that a load resistor (RB) is connected in series with the smoothing inductor (LD2) of one supply converter (15).

10. Converter circuit according to Claim 9, characterised in that the load resistor (RB) is bridged by a diode (DF).

11. Converter circuit according to Claim 9, characterised in that the load resistor (RB) is bridged by a switch contact (29).

**Revendications**

1. Montage convertisseur de courant pour l'alimentation d'un circuit intermédiaire à tension continue à partir d'un réseau de tension alternative, les bornes de tension alternative étant reliées par l'intermédiaire d'une bobine de lissage (LD1, LD2) aux bornes correspondantes du circuit en pont composé de quatre branches, chaque branche présentant une soupape pouvant être allumée et éteinte (T1...T4) avec un redresseur antiparallèle non commandé (D1...D4), caractérisé en ce que pour pouvoir également effectuer une alimentation à partir d'un réseau de tension continue, un contact de commutation (17) est prévu entre les bornes (F, G) côté tension continue de deux branches de même polarité (T1/D1, T3/D3), l'alimentation à partir d'un réseau de tension continue s'effectuant par les bornes de tension continue (D, E) du convertiseur de courant, le contact de commutation (17) étant ouvert tandis que les bornes de tension alternative (A1, B1, A2, B2) sont court-circuitées.

2. Montage convertisseur de courant selon la revendication 1, caractérisé en ce que les bornes de tension alternative (A1, B1, A2, B2) peuvent être court-circuitées au moyen d'un contact de commutation (16, 19).

3. Montage convertisseur de courant selon la revendication 1, caractérisé en ce que les bornes de tension alternative (A1, B1, A2, B2) peuvent être court-circuitées à l'aide d'un court-circuiteur électronique de réseau composé de deux thyristors (23, 24, 15,16) antiparallèles.

4. Montage convertisseur de courant selon l'une des revendications 1 à 3, caractérisé en ce que la bobine de lissage (LD1, LD2) peut être court-circuitée par un contact de commutation de commande (18, 20).

5. Montage convertisseur de courant selon la revendication 1, caractérisé en ce que pour utiliser un filtre de réseau comme circuit d'absorption, il est prévu un contact de commutation (27) entre la bobine (LF/LS) et la borne (F) côté tension continue du convertisseur de courant ainsi qu'un autre contact de commutation (28) entre un pôle de connexion du réseau de tension continue et la borne (F) côté tension continue, la bobine (LF/LS) et le condensateur (CS/CF) étant reliés directement l'un à l'autre.

6. Montage convertisseur de courant selon l'une des revendications 1 à 5, caractérisé en ce que pour l'alimentation du même circuit intermédiaire, il est prévu au moins un autre convertisseur de courant d'alimentation (15) qui, côté tension continue, est monté en parallèle avec le premier convertisseur de courant d'alimentation (14), et dont l'une des bornes de tension continue est reliée à la borne de tension continue (E) non commutée du premier convertisseur de courant d'alimentation (14) et dont la deuxième borne de tension continue est séparée et est raccordée aux deux bornes du contact de commutation (17) séparant l'une des bornes de tension continue du premier convertisseur de courant d'alimentation (14).

7. Montage convertisseur de courant selon la revendication 6, caractérisé en ce que la bobine de lissage (LD2) d'un convertisseur de courant d'alimentation (15) est remplacée par une résistance de freinage (RB).

8. Montage convertisseur de courant selon la revendication 7, caractérisé en ce que la résistance de freinage (RB) est pontée par un contact de commutation (20).

9. Montage convertisseur de courant selon la revendication 6, caractérisé en ce qu'une résistance de freinage (RB) est montée en série avec la bobine de lissage (LD2) d'un convertisseur de courant d'alimentation (15).

10. Montage convertisseur de courant selon la revendication 9, caractérisé en ce que la résistance de freinage (RB) est pontée par une diode (DF).

11. Montage convertisseur de courant selon la revendication 9, caractérisé en ce que la résistance de freinage (RB) est pontée par un contact de commutation (29).

Fig.1

Fig. 2

Fig. 3

Fig. 4

Fig. 5

Fig. 6

Fig. 7

EP 0 300 392 B1